# EUROPEAN PATENT SPECIFICATION

(11) **EP 3 372 650 B1**
(45) Date of publication and mention of the grant of the patent: **08.01.2020**
(21) Application number: 16862465.8
(22) Date of filing: 04.11.2016
(51) Int. Cl.: C09J 163/00, C09D 125/08, C09D 109/02

(54) **TWO LIQUID TYPE EPOXY ADHESIVE COMPOSITION**
EPOXIDKLEBSTOFFZUSAMMENSETZUNG MIT ZWEI FLÜSSIGKEITEN
COMPOSITION ÉPOXY ADHÉSIVE DE TYPE À DEUX LIQUIDES

(30) Priority: 06.11.2015 KR 20150155860
(43) Date of publication of application: 12.09.2018
(73) Proprietor: KCC Corporation, Seoul 06608 (KR); Hyundai Heavy Industries Co., Ltd., Ulsan 44032 (KR)
(72) Inventor: HAN, Sang Hun, Yongin-si Gyeonggi-do 16988 (KR); KIM, Jae Hyo, Ulsan 44496 (KR); ANN, Jee Hye, Yongin-si Gyeonggi-do 16891 (KR); HAN, Guk Hyun, Bucheon-si Gyeonggi-do 14609 (KR); BAE, Han Jin, Busan 48107 (KR); PARK, Chung Seo, Ulsan 44002 (KR); SONG, Eun Ha, Ulsan 44046 (KR); BAEK, Yun Ho, Ulsan 44045 (KR)
(74) Representative: Cabinet Laurent & Charras
(86) International application number: PCT/KR2016/012631
(87) International publication number: WO 2017/078449

(56) References cited:
- EP-A1- 2 072 556
- EP-A1- 3 009 461
- KR-A- 20070 070 949
- KR-A- 20090 055 393
- KR-A- 20130 096 825
- KR-B1- 101 144 227
- KR-B1- 950 005 345
- US-A1- 2012 128 499

## Description

### [Technical Field]

The present invention relates to a 2-part epoxy adhesive composition, and more particularly, to a 2-part epoxy adhesive composition which exhibits improved adhesive and mechanical properties in a cryogenic environment, and thus is particularly useful in bonding a material of a tank of an LNG carrier.

### [Background Art]

Adhesive products used to bond a top bridge pad (TBP) among materials of an insulation cargo tank for storing liquefied natural gas (LNG) can be applied only when their adhesive and mechanical properties in a cryogenic environment (-170 °C) satisfy the specifications of Gaztransport & Technigaz (GTT) which is a certification authority.

Korean Unexamined Patent Publication No. 10-2010-0099974 discloses a 2-part adhesive in which a carboxyl-terminated butadiene-acrylonitrile (CTBN)-modified epoxy resin (epoxy equivalent weight (EEW): 350 to 400 g/eq) and an urethane-modified epoxy resin are used as epoxy resins used for a base resin, and a polyamide resin and amine-terminated butadiene-acrylonitrile (ATBN) are used as curing agents.

Meanwhile, EP Patent Publication No. 2402394 A1 discloses a 2-part epoxy structural adhesive in which, to improve impact resistance, a nitrile butadiene rubber (NBR)-modified epoxy resin/core-shell type elastomer and phenyltrimethoxysilane (PTMS), which is a silane coupling agent, are used for a base resin, and a polyamide resin and a polyether amine are used as curing agents.

Document EP 3 009 461 discloses that at least one of epoxy resins that react with a polyurethane polymer including at least one of block isocyanate groups may additionally react with a polymer containing a carboxyl group. The polymer containing a carboxyl group is disclosed as a "carboxyl-terminated butadiene-acrylonitrile (CTBN) copolymer"

Document US 2012/128499 discloses an epoxy-dimer acid adduct comprising a dimer acid and an epoxy compound modified with a carboxyl-terminated butadiene-acrylonitrile copolymer. Document EP 2 072 556 discloses a method for producing polyurethanes, based on the reaction of a polymer, which has hydroxyl groups, and a polyisocyanate. Thes documents do not disclose any epoxyresins modified with a rubber resin and a dimer acid.

These conventional techniques have been developed to compensate for the disadvantage of an epoxy-amine curing system, such as rigidity or very low flexibility, but have not succeeded in producing low modulus characteristics.

Accordingly, there is a need to develop a 2-part adhesive which exhibits levels of the coefficient of thermal contraction and other thermal properties equal to or higher than those of a conventional 2-part adhesive while having a relatively low modulus, i.e., higher flexibility.

### [Disclosure]

### [Technical Problem]

It is an object of the present invention to provide a 2-part epoxy adhesive composition which satisfies all of GTT's requirement properties (such as shear, tension, airtightness, and the like) while exhibiting a low modulus at low temperatures.

### [Technical Solution]

According to the present invention, a 2-part epoxy adhesive composition is characterized by including a base resin component and a curing agent component, wherein the base resin component includes (i) an epoxy resin modified with a rubber resin having a number average molecular weight of 1,000 to 8,000 and a dimer acid, (ii) a bisphenol-A type epoxy resin, and (iii) a bisphenol-F type epoxy resin.

### [Advantageous Effects]

A 2-part epoxy adhesive composition according to the present invention can satisfy all of GTT's requirement properties (such as shear, tension, airtightness, and the like) while exhibiting a low modulus at low temperatures. Also, even when a bonding process is performed by applying the composition onto a vertical or horizontal substrate, the squeezing out of the composition is prevented, and thus the composition does not flow down and is highly sag-resistant. Therefore, the composition can be very appropriately used for bonding of a material of a tank (particularly, a top bridge pad (TBP) of an insulation cargo tank) of an LNG carrier (particularly, Mark III type LNG carrier).

### [Best Mode]

Hereinafter, the present invention will be described in detail.

### 1. Base resin component of 2-part epoxy adhesive composition

In the 2-part epoxy adhesive composition according to the present invention, the base resin component includes an epoxy resin modified with a rubber resin having a number average molecular weight of 1,000 to 8,000 and a dimer acid; a bisphenol-A type epoxy resin; and a bisphenol-F type epoxy resin.

The rubber resin may be selected from the group consisting of polybutadiene, acrylonitrile butadiene, styrene-butadiene rubber, epoxy-terminated butadiene acrylonitrile (ETBN), carboxyl-terminated butadiene acrylonitrile (CTBN), amine-terminated butadiene acrylonitrile (ATBN), hydroxy-terminated butadiene acrylonitrile (HTBN), and a combination thereof, all of which have a number average molecular weight of 1,000 to 8,000, but the present invention is not limited thereto. Also, the rubber resin may have a glass transition temperature of, for example, -80 to -20 °C, but the present invention is not limited thereto.

The rubber resin is preferably selected from the group consisting of carboxyl-terminated butadiene acrylonitrile (CTBN), amine-terminated butadiene acrylonitrile (ATBN), and a combination thereof, all of which have a number average molecular weight of 1,000 to 5,000, and more preferably is carboxyl-terminated butadiene acrylonitrile (CTBN) having a number average molecular weight of 1,500 to 4,500.

The dimer acid is a dicarboxylic acid prepared through oligomerization of an unsaturated fatty acid (e.g., a C18-unsaturated fatty acid). According to one embodiment, the dimer acid may be a dimer of tall oil fatty acid, soybean oil fatty acid, flaxseed oil fatty acid, or the like, but the present invention is not limited thereto. As the dimer acid, a dimer acid obtained through dimerization of a fatty acid having an iodine value of 100 or more or a hydrogenated dimer acid in which hydrogen is added to the thus prepared dimer acid to remove unsaturated bonds may be used.

The rubber resin/dimer acid-modified epoxy resin may be prepared by reacting an epoxy resin with a rubber resin and a dimer acid. In this case, the rubber resin, the dimer acid, and the epoxy resin may be used, for example, at 4 to 10 wt% of rubber resin, 2 to 8 wt% of dimer acid, and 82 to 94 wt% of epoxy resin, respectively, based on 100 wt% of a total of these components. When the dimer acid is used at greater than 8 wt% based on 100 wt% of the total components, the modulus may be lowered, but thermal deformation may occur. On the other hand, when the dimer acid is less than 2 wt%, a desired level of a low modulus effect may not be exhibited.

The rubber resin/dimer acid-modified epoxy resin prepared in the above mixing ratio may have an epoxy equivalent weight of, for example, 150 to 400 g/eq.

In one embodiment, the rubber resin/dimer acid-modified epoxy resin may be prepared, for example, using a liquid epoxy resin having an epoxy equivalent weight of 150 to 400 g/eq and CTBN having a number average molecular weight of 1,500 to 4,500 and a glass transition temperature of -80 to -20 °C, but the present invention is not limited thereto.

The 2-part epoxy adhesive composition according to the present invention may include the rubber resin/dimer acid-modified epoxy resin, for example, at 5 wt% or more, 10 wt% or more, 15 wt% or more, or 20 wt% or more based on 100 wt% of the base resin component, and also at 60 wt% or less, 55 wt% or less, or 50 wt% or less. If the content of the rubber resin/dimer acid-modified epoxy resin in the base resin component is excessively small, there may be a problem in improvement for a low modulus. On the other hand, if it is excessively large, heat deformation is caused largely.

The base resin of the 2-part epoxy adhesive composition according to the present invention includes a bisphenol-A type (hereinafter, referred to as "BPA") epoxy resin.

The BPA epoxy resin may have an epoxy equivalent weight of 150 to 400 g/eq, but the present invention is not limited thereto. Also, the BPA epoxy resin may be an unmodified BPA epoxy resin, a modified BPA epoxy resin, or a combination thereof. As the modified BPA epoxy resin, for example, a silane-modified BPA epoxy resin (hereinafter, referred to as "a silyl-modified BPA epoxy resin") may be used.

The silyl-modified BPA epoxy resin may be prepared by reacting an unmodified BPA epoxy resin with a silane compound. In this case, the amount ratio of the silane compound and the unmodified BPA epoxy resin may be used, for example, at 1 to 5 wt% of the silane compound and 95 to 99 wt% of the unmodified BPA epoxy resin by based on 100 wt% of a total of these compounds. When the silane compound is used at greater than 5 wt% based on 100 wt% of a total of the compounds, adhesive strength may be degraded.

In one embodiment, the silyl-modified BPA epoxy resin may be prepared, for example, using a liquid unmodified BPA epoxy resin having an epoxy equivalent weight of 150 to 400 g/eq and aminosilane, mercaptosilane, epoxysilane, or a combination thereof as the silane compound may be used, but the present invention is not limited thereto.

The 2-part epoxy adhesive composition according to the present invention may include the (modified or unmodified) BPA epoxy resin, for example, at 5 wt% or more, 10 wt% or more, 15 wt% or more, or 20 wt% or more based on 100 wt% of the base resin component, and also at 50 wt% or less, 45 wt% or less, or 40 wt% or less. If the content of the (modified or unmodified) BPA epoxy resin in the base resin component is excessively small, there may be problems in adhesion with a substrate and cohesion bonding in an adhesive. On the other hand, if it is excessively large, there may be a problem in adhesion being rather degraded, and there may be a problem in the base resin storability. The base resin of the 2-part epoxy adhesive composition according to the present invention includes a bisphenol F type (hereinafter, referred to as "BPF") epoxy resin.

In one embodiment, the BPF epoxy resin may have an epoxy equivalent weight of 150 to 500 g/eq, but the present invention is not limited thereto. The 2-part epoxy adhesive composition according to the present invention may include the BPF epoxy resin, for example, at 2 wt% or more, 5 wt% or more, 7 wt% or more, or 8 wt% or more based on 100 wt% of the base resin component, and also at 45 wt% or less, 35 wt% or less, 25 wt% or less, 20 wt% or less, or 10 wt% or less. If the content of the BPF epoxy resin in the base resin component is excessively small, there may be a problem in a wetting property of a substrate due to an increase in the viscosity of the base resin. On the other hand, if it is excessively large, there may be a problem in workability, particularly, flowability.

The base resin component of the 2-part epoxy adhesive composition according to the present invention may further include one or more additional materials such as a dispersant, an antifoaming agent, a pigment, and the like in addition to the above-described materials as necessary. Types and usage amounts of these additional materials may be appropriately selected.

### 2. Curing agent component of 2-part epoxy adhesive composition

The 2-part epoxy adhesive composition according to the present invention includes a curing agent component.

In one embodiment, the curing agent component may include a curing resin, a curing catalyst, and a non-reactive diluent.

In one embodiment, the curing resin is preferably a polyamide resin having an amine value of 150 to 400 mgKOH/g, but the present invention is not limited thereto. The polyamide resin may be used in combination with polyamines such as amidoamine, phenalkamine, polyetheramine, and the like.

In one embodiment, the 2-part epoxy adhesive composition according to the present invention may include the curing resin, for example, at 30 wt% or more, 40 wt% or more, or 50 wt% or more based on 100 wt% of the curing agent component, and also at 90 wt% or less, 80 wt% or less, or 70 wt% or less. If the content of the curing resin in the curing agent component is excessively small, there may be a problem in a curing property of an adhesive. On the other hand, if it is excessively large, the relative contents of a filler and an additive, which are capable of adjusting viscosity of the curing agent, are decreased, and thus it may be impossible to prepare a curing agent having an appropriate viscosity.

In one embodiment, the curing catalyst may be a tertiary amine such as DMP-30, but the present invention is not limited thereto. The 2-part epoxy adhesive composition according to the present invention may include the curing catalyst, for example, at 0.1 wt% or more, 0.5 wt% or more, or 1 wt% or more based on 100 wt% of the curing agent component, and also at 10 wt% or less, 5 wt% or less, or 3 wt% or less. If the content of the curing catalyst is included in the curing agent component is excessively small, more time may be required for curing at low temperatures. On the other hand, if it is excessively large, a desired pot life, i.e., open time, may not be ensured due to a short curing time.

In one embodiment, the non-reactive diluent may be an aromatic hydrocarbon solvent (e.g., benzene, toluene, xylene (BTX)), an alcohol, an acetate, or a combination thereof, but the present invention is not limited thereto. The 2-part epoxy adhesive composition according to the present invention may include the non-reactive diluent, for example, at 1 wt% or more, 3 wt% or more, or 5 wt% or more based on 100 wt% of the curing agent component, and also at 40 wt% or less, 30 wt% or less, 20 wt% or less, 10 wt% or less, or 7 wt% or less. If the content of the non-reactive diluent is included in the curing agent component is excessively small, a curing resin with high viscosity and a solid content of 100% may not be uniformly dispersed. On the other hand, if it is excessively large, a VOC content increases, and thus there may be a problem in an operation in a cargo tank.

The curing agent component of the 2-part epoxy adhesive composition according to the present invention may further include one or more additional materials such as a curing accelerator, a silane coupling agent, a dispersant, an antifoaming agent, an anti-settling agent, a pigment, and the like in addition to the above-described materials as necessary. Types and usage amounts of these additional materials may be appropriately selected.

### 3. 2-part epoxy adhesive composition

In the 2-part epoxy adhesive composition according to the present invention, a mixing ratio of the base resin component and the curing agent component is preferably 1 : 0.6 to 1 : 0.7 by weight ratio or 1 : 0.7 to 1 : 0.8 by volume ratio, but the present invention is not limited thereto. Also, it is preferable that an working is performed within 2 hours after the 2-part epoxy adhesive composition according to the present invention is coated through a dispenser (open time of 2 hours at room temperature).

According to one embodiment, the base resin component of the 2-part epoxy adhesive composition according to the present invention may have a viscosity of 100,000 to 200,000 mPa·s and a specific gravity of 1.3 to 1.5, and the curing agent component may have a viscosity of 200,000 to 350,000 mPa·s and a specific gravity of 1.0 to 1.2.

Hereinafter, the present invention will be described in further detail with reference to embodiments thereof. However, it should be understood that the following embodiments disclosed herein are not intended to limit the scope of the present invention.

### [Examples]

### 1. Synthesis Examples

### 1-1. CTBN/dimer acid-modified epoxy resin

900 g of a liquid epoxy resin (epoxy equivalent weight: 187 g/eq), 45 g of carboxyl-terminated butadiene acrylonitrile (CTBN; number average molecular weight: 3,000 g/mol and glass transition temperature: -39 °C), and 20 g of a dimer acid were sequentially added to a four-necked flask for synthesis equipped with a thermometer and a stirrer, and then the temperature of the reaction flask was slowly raised up to 120 °C while introducing nitrogen gas. The temperature was maintained at 120 °C for 3 hours or more to obtain a CTBN/dimer acid-modified epoxy resin with a solid content of 100%.

### 1-2. CTBN-modified epoxy resin

900 g of a liquid epoxy resin (epoxy equivalent weight: 187 g/eq) and 45 g of CTBN (number average molecular weight: 3,000 g/mol and glass transition temperature: -39 °C) were sequentially added to a four-necked flask for synthesis equipped with a thermometer and a stirrer, and then the temperature of the reaction flask was slowly raised up to 120 °C while introducing nitrogen gas. The temperature was maintained at 120 °C for 3 hours or more to obtain a CTBN-modified epoxy resin with a solid content of 100%.

### 1-3. CTBN (excessive amount of CTBN-15%)/dimer acid-modified epoxy resin

900 g of a liquid epoxy resin (epoxy equivalent weight: 187 g/eq), 135 g of CTBN (number average molecular weight: 3,000 g/mol and glass transition temperature: -39 °C), and 20 g of a dimer acid were sequentially added to a four-necked flask for synthesis equipped with a thermometer and a stirrer, and then the temperature of the reaction flask was slowly raised up to 120 °C while introducing nitrogen gas. The temperature was maintained at 120 °C for 3 hours or more to obtain an epoxy resin modified with an excessive amount of CTBN with a solid content of 100%.

### 1-4. CTBN/dimer acid (excessive amount of dimer acid-12%)-modified epoxy resin

900 g of a liquid epoxy resin (epoxy equivalent weight: 187 g/eq), 45 g of CTBN (number average molecular weight: 3,000 g/mol and glass transition temperature: -39 °C), and 110 g of a dimer acid were sequentially added to a four-necked flask for synthesis equipped with a thermometer and a stirrer, and then the temperature of the reaction flask was slowly raised up to 120 °C while introducing nitrogen gas. The temperature was maintained at 120 °C for 3 hours or more to obtain an epoxy resin modified with an excessive amount (compared to Synthesis Example 1-1) of a dimer acid with a solid content of 100%.

### 1-5. Silyl-modified epoxy resin

965 g of a liquid bisphenol-A type epoxy resin (epoxy equivalent weight: 187 g/eq) and 25 g of a xylene solvent were sequentially added to a four-necked flask for synthesis equipped with a thermometer and a stirrer, and then the temperature of the reaction flask was slowly raised up to 100 °C while introducing nitrogen gas. The pressure of the reaction flask was reduced to completely remove the solvent, and then the reactants were cooled to 40 °C or lower. After the cooling was completed, 35 g of aminosilane was added thereto, and the mixture was stirred for 10 hours or more to obtain a silyl-modified epoxy resin with a solid content of 100%.

### 2. Example

### (1) Preparation of base resin

According to the compositions for a base resin as shown in the following Table 1, an epoxy resin and a dispersant were first added to a high-viscosity mixer, the mixture was stirred moderately, and then a pigment was dividedly added thereto. After the pigment was uniformly dispersed, an antifoaming agent was added and stirred for a predetermined time. Finally, the resulting mixture was subjected to vacuum degassing to obtain a base resin composition having a viscosity of 141,000 mPa·s (specific gravity: 1.31).

### (2) Preparation of curing agent

According to the compositions for a curing agent as shown in the following Table 1, a curing agent composition having a viscosity of 314,000 mPa·s (specific gravity: 1.13) was prepared in the same manner as the method of preparing a base resin.

**[Table 1]**

| (Content: parts by weight) | | | | | | |
|---|---|---|---|---|---|---|
| | Component | Examples | | Comparative Examples | | |
| | | 1 | 2 | 1 | 2 | 3 |
| Base resin | Epoxy resin (1): Silyl-modified epoxy resin (Synthesis Example 1-5) | | 35 | | | |
| | Epoxy resin (2): CTBN/dimer acid-modified epoxy resin (Synthesis Example 1-1) | 30 | 30 | | | |
| | Epoxy resin (3): CTBN-modified epoxy resin (Synthesis Example 1-2) | | | 30 | | |
| | Epoxy resin (4): CTBN (excessive amount of CTBN)/dimer acid-modified epoxy resin (Synthesis Example 1-3) | | | | 30 | |
| | Epoxy resin (5): CTBN/dimer acid (excessive amount of dimer acid)-modified epoxy resin (Synthesis Example 1-4) | | | | | 30 |
| | Epoxy resin (6): Bisphenol-F type epoxy resin (epoxy equivalent weight: 160-180) (Kukdo Chemical Co., Ltd.) | 7 | 7 | 7 | 7 | 7 |
| | Epoxy resin (7): Bisphenol-A type epoxy resin (epoxy equivalent weight: 180-200) (Kukdo Chemical Co., Ltd.) | 35 | | 35 | 35 | 35 |
| | Pigment (1): Hydrocarb 95T (Omya Korea Inc.) | 25 | 25 | 25 | 25 | 25 |
| | Pigment (2): Reolosil MT10 (Tokuyama Corporation) | 1.7 | 1.7 | 1.7 | 1.7 | 1.7 |
| | Pigment (3): Paliotol Yellow (BASF Corporation) | 0.1 | 0.1 | 0.1 | 0.1 | 0.1 |
| | Additive (1): Anti-Terra 203 (BYK Additives & Instruments) - dispersant | 1 | 1 | 1 | 1 | 1 |
| | Additive (2): BYK-063 (BYK Additives & Instruments) - antifoaming agent | 0.2 | 0.2 | 0.2 | 0.2 | 0.2 |
| | Total | 100 | 100 | 100 | 100 | 100 |
| Curing agent | Curing resin: Polyamide resin (amine value: 280-320 mgKOH/g) (KCC Corporation) | 65 | 65 | 65 | 65 | 65 |
| | Epoxy curing catalyst: Aradur 2950 (Huntsman International LLC.) | 1.2 | 1.2 | 1.2 | 1.2 | 1.2 |
| | Pigment (1): Hydrocarb 95T (Omya Korea Inc.) | 20 | 20 | 20 | 20 | 20 |
| | Pigment (2): Reolosil MT10 (Tokuyama Corporation) | 6 | 6 | 6 | 6 | 6 |
| | Pigment (4): Hostaperm Red (Clariant) | 0.1 | 0.1 | 0.1 | 0.1 | 0.1 |
| | Additive (1): ANTI-TERRA 203 (BYK Additives & Instruments) | 1 | 1 | 1 | 1 | 1 |
| | Additive (2): BYK-063 (BYK Additives & Instruments) | 0.2 | 0.2 | 0.2 | 0.2 | 0.2 |
| | Additive (3): BYK-410 (BYK Additives & Instruments) | 2 | 2 | 2 | 2 | 2 |
| | Additive (4): A-1100 (Evonik) | 1 | 1 | 1 | 1 | 1 |
| | Non-reactive diluent: Benzyl alcohol | 3.5 | 3.5 | 3.5 | 3.5 | 3.5 |
| | Total | 100 | 100 | 100 | 100 | 100 |

### 3. Reference Examples

In the reference examples, a conventional 2-part epoxy adhesive was used (Reference Example 1: a product commercially available from Huntsman International LLC. (Product name: XB5032A (base resin) and XB5319 (curing agent)) and Reference Example 2: a product commercially available from Unitech Co., Ltd. (Product name: UEA100 (base resin) and UEA300 (curing agent))).

### 4. Experimental Examples

### Mixing conditions

A base resin and a curing agent were uniformly mixed in a weight ratio of 1 : 0.64 (viscosity of a mixture: 184,000 mPa·s) to evaluate adhesive and mechanical properties. Unless mentioned otherwise, curing was performed for 7 days at room temperature, and all properties were evaluated after 7 days.

### (1) Experimental Example 1: Single shear test

The single shear test was performed at a rate of 1.3 mm/min at room temperature and -170 °C using a universal testing machine (UTM). The test was performed for two bonding types, FSB/FSB and RSB/RSB. [FSB: flexible secondary barrier, RSB: rigid secondary barrier]

Two types of specimens were prepared as follows.
RSB bonding type: Sus / PU glue / RSB / adhesive / RSB / PU glue / Sus
FSB bonding type: Sus / PU glue / FSB / adhesive / FSB / PU glue / Sus

### - Acceptable standard

GTT specification (M3006): ≥ 3.5 MPa

### (2) Experimental Example 2: Cylindrical tensile test

The cylindrical tensile test was performed at room temperature and -170 °C at a rate of 1.3 mm/min for RSB and at a rate of 5 mm/min for RPUF. The test was performed for two bonding types, SUS specimen / adhesive / RSB / adhesive / SUS specimen 1) and SUS specimen / adhesive / FSB / adhesive / RPUF / adhesive / FSB / adhesive / SUS specimen 2). [SUS: steel use stainless (stainless steel), RPUF: reinforced polyurethane foam]

### - Acceptable standards

GTT specification (M3006):
1) RSB: ≥ 3.2 MPa;
2) FSB/RPUF/FSB: ≥ 1.1 MPa (room temperature) and ≥ 1.2 MPa (-170 °C)

### (3) Experimental Example 3: Airtightness test

The airtightness test was performed as follows. A test sample was prepared, and then a partial vacuum (-530 mbar) was applied between a support and RSB. Afterward, the pump was switched off, and then the degree of a pressure increase over 24 hours was checked. While applying a thermal shock (applying liquid nitrogen) seven additional times, a change (increase) in the pressure over 24 hours was recorded every time the shock was applied. A time required to perform the test was 8 times (including the first time) × 24 hours = about 192 hours.

### - Acceptable standard

GTT specification (M3006): ≤ 80 mbar/hr

### (4) Experimental Example 4: Seawater immersion test

A specimen for a lap-shear test was immersed in seawater at room temperature and -130 °C for 2, 4, and 6 weeks. The relative percentage (%) of a lap-shear value after one immersion was evaluated based on 100% of an initial lap-shear value of the specimen before immersion.

### - Acceptable standard

80% or more of initial value

### (5) Experimental Example 5: Modulus test

For a specimen with a size of 50 (width)×10 (length)×3 (height) mm, the flexural modulus (in the 3-point bending mode) was measured at room temperature and a low temperature (-110°C) using a dynamic mechanical analyzer (DMA, Model: DMA 8,000 commercially available from PerkinElmer Inc.).

### (6) Experimental Example 6: Thermal contraction test

The coefficient of thermal expansion (CTE) of a specimen was measured at intervals of 2.5 °C between -30 and 50 °C using a thermal mechanical analyzer (TMA, Model: Q400 commercially available from TA Instruments) and averaged.

### (7) Experimental Example 7: Tensile strength test

The tensile strength of a specimen was measured at room temperature and a low temperature (-130 °C) using a UTM (Model: INSTRON 4206).

The test results are shown in the following Table 2.

**[Table 2]**

| Test item | | Example 1 | Example 2 | Comparative Examples | | | Reference Examples | |
|---|---|---|---|---|---|---|---|---|
| | | | | 1 | 2 | 3 | 1 | 2 |
| Single shear test (MPa) | Room temperature | FSB/FSB≥5 | FSB/FSB≥5 | FSB/FSB≥5 | FSB/FSB≥5 | FSB/FSB≥3.5 | FSB/FSB ≥3.5 | |
| | | RSB/RSB≥14 | RSB/RSB≥16 | RSB/RSB≥14 | RSB/RSB≥13 | RSB/RSB≥12 | RSB/RSB≥3.5 | |
| | -170 °C | FSB/FSB≥15 | FSB/FSB≥17 | FSB/FSB≥15 | FSB/FSB≥16 | FSB/FSB≥12 | FSB/FSB≥3.5 | |
| | | RSB/RSB≥20 | RSB/RSB≥22 | RSB/RSB≥19 | RSB/RSB≥20 | RSB/RSB≥16 | RSB/RSB≥3.5 | |
| Cylindrical tensile test (Room temperature, - 170°C; MPa) | | RSB≥20 FSB/RPUF/FSB≥2 | RSB≥20 FSB/RPUF/FSB≥2 | RSB≥20 FSB/RPUF/FSB≥2 | RSB≥19 FSB/RPUF/FSB≥2 | RSB≥17 FSB/RPUF/FSB≥2 | RSB≥20 FSB/RPUF/FSB≥2 | |
| Airtightness test (mbar/hr) | | 2.13 (after 7^{th} TS) | 1.80 | 8.51 | 10.35 | 2.86 | 80 | |
| Seawater immersion test (2/4/6 weeks) | Room temperature | 93%/85%/83% | 94%/88%/85% | 92%/85%/83% | 92%/83%/80% | 90%/82%/77% | ≥80% (after 6 weeks) | |
| | 130 °C | 94%/94%/90% | 94%/94%/90% | 94%/92%/89% | 94%/93%/88% | 92%/90%/86% | | |
| Modulus test | Room temperature | 3683 MPa | 3525 MPa | 4015 | 3261 | 3232 | 4232 | 4479 |
| | 110°C | 6790 MPa | 6730 MPa | 7920 | 7150 | 6510 | 8790 | 8160 |
| Thermal deformation test (CTE) | | 11.6×10⁻⁶ | 10.5×10⁻⁶ | 11.4×10⁻⁶ | 72.2×10⁻⁶ | 21.7×10⁻⁵ | 22.7×10⁻⁶ | 10.7×10⁻⁶ |
| Tensile strength test | Room temperature | 44 MPa | 44 MPa | 40 | 41 | 36 | 38 | 41 |
| | -130 ° C | 58 MPa | 59 MPa | 59 | 56 | 45 | 46 | 32 |

Referring to Table 2, in the case of the present invention, all mechanical properties were shown to surpass the specifications of conventional products (Reference Examples 1 and 2) by 30% or more. Also, it can be seen that modulus values at a very low temperature were lower than those of conventional products by 20 to 25%, indicating that flexibility in a cryogenic environment (leakage condition of LNG, about -110°C) is significantly improved.

In the case of the epoxy resin modified with only CTBN (Comparative Example 1), it is difficult to suitably realize both a low modulus and low thermal deformation (CTE) in a cryogenic environment, and thus it is preferable to use an appropriate amount of dimer acid as well. Although, among CTBN/dimer acid-modified epoxy resins, Comparative Examples 2 and 3, in which an excessive amount of CTBN or a dimer acid were included, exhibited a lower modulus in a cryogenic environment, they also exhibited degraded strength and adhesion and weak thermal dimensional stability.

## Claims

1. A 2-part epoxy adhesive composition comprising a base resin component and a curing agent component,
wherein the base resin component includes
(i) an epoxy resin modified with a rubber resin having a number average molecular weight of 1,000 to 8,000 and a dimer acid,
(ii) a bisphenol A type epoxy resin, and
(iii) a bisphenol F type epoxy resin.

2. The 2-part epoxy adhesive composition of claim 1, wherein the rubber resin having a number average molecular weight of 1,000 to 8,000 is selected from the group consisting of polybutadiene, acrylonitrile butadiene, styrene-butadiene rubber, epoxy-terminated butadiene acrylonitrile, carboxyl-terminated butadiene acrylonitrile, amine-terminated butadiene acrylonitrile, hydroxy-terminated butadiene acrylonitrile, and a combination thereof.

3. The 2-part epoxy adhesive composition of claim 1, wherein the epoxy resin modified with a rubber resin and a dimer acid is prepared by reacting an epoxy resin with a rubber resin and a dimer acid, and the rubber resin, the dimer acid, and the epoxy resin are used at 4 to 10 wt% of rubber resin, 2 to 8 wt% of dimer acid, and 82 to 94 wt% of epoxy resin, respectively, based on 100 wt% of a total of these components.

4. The 2-part epoxy adhesive composition of claim 1, wherein the bisphenol A type epoxy resin is an unmodified bisphenol A type epoxy resin, a modified bisphenol A type epoxy resin, or a combination thereof.

5. The 2-part epoxy adhesive composition of claim 4, wherein the modified bisphenol-A type epoxy resin is a silane-modified bisphenol-A type epoxy resin.

6. The 2-part epoxy adhesive composition of claim 5, wherein the silane-modified bisphenol A type epoxy resin is prepared by reacting an unmodified bisphenol A type epoxy resin with a silane compound.

7. The 2-part epoxy adhesive composition of claim 6, wherein the unmodified bisphenol A type epoxy resin has an epoxy equivalent weight of 150 to 400 g/eq, and the silane compound is aminosilane, mercaptosilane, epoxysilane, or a combination thereof.

8. The 2-part epoxy adhesive composition of claim 1, wherein the curing agent component includes a curing resin, a curing catalyst, and a non-reactive diluent.

9. The 2-part epoxy adhesive composition of claim 8, wherein the curing resin is a polyamide having an amine value of 150 to 400 mgKOH/g.

10. The 2-part epoxy adhesive composition of claim 1, wherein a mixing ratio of the base resin component and the curing agent component is 1 : 0.6 to 1 : 0.7 by weight ratio or 1 : 0.7 to 1 : 0.8 by volume ratio.

## Patentansprüche

1. Epoxidklebstoffzusammensetzung mit zwei Flüssigkeiten mit einer Basis-Harzkompenente und einer Härterkomponente,
wobei die Harzkompenente umfasst
(i) ein Epoxidharz, das mit einem Kautschukharz mit einer zahlenmittleren Molmasse von 1.000 bis 8.000 und einer Dimersäure modifiziert ist,
(ii) ein Bisphenol-A Typ Epoxidharz, und
(iii) ein Bisphenol-F Typ Epoxidharz.

2. Epoxidklebstoffzusammensetzung mit zwei Flüssigkeiten gemäß Anspruch 1, wobei das Kautschukharz mit einer zahlenmittleren Molmasse von 1.000 bis 8.000 aus der Gruppe ausgewählt wird, die aus Polybutadien, Acrylnitril- Butadien, Styrol-Butadien- Kautschuk, epoxid-terminiertem Butadien-Acrylnitril, carboxylterminiertem Butadien-Acrylnitril, amino-terminiertem Butadien-Acrylnitril, hydroxy-terminiertem Butadien-Acrylnitril und einer Kombination daraus besteht.

3. Epoxidklebstoffzusammensetzung mit zwei Flüssigkeiten gemäß Anspruch 1, wobei das mit einem Kautschukharz und einer Dimersäure modifizierte Epoxidharz hergestellt wird, indem ein Epoxidharz mit einem Kautschukharz und einer Dimersäure zur Reaktion gebracht werden, die mit 4 bis 10 Gew.-% Kautschukharz, 2 bis 8 Gew.-% Dimersäure und 82 bis 94 Gew.-% Epoxidharz, jeweils auf Basis einer Gesamtmenge dieser Komponenten von 100 Gew.-% eingesetzt werden.

4. Epoxidklebstoffzusammensetzung mit zwei Flüssigkeiten gemäß Anspruch 1, wobei es sich bei dem Bisphenol-A Typ Epoxidharz um ein nicht modifiziertes Bisphenol-A Typ Epoxidharz, ein modifiziertes Bisphenol-A Typ Epoxidharz oder eine Kombination daraus handelt.

5. Epoxidklebstoffzusammensetzung mit zwei Flüssigkeiten gemäß Anspruch 4, wobei es sich bei dem Bisphenol-A Typ Epoxidharz um ein silan-modifiziertes Bisphenol-A Typ Epoxidharz handelt.

6. Epoxidklebstoffzusammensetzung mit zwei Flüssigkeiten gemäß Anspruch 5, wobei das silan-modifizierte Bisphenol-A Typ Epoxidharz hergestellt wird, indem ein nicht modifiziertes Bisphenol-A Typ Epoxidharz mit einer Silan- Verbindung zur Reaktion gebracht wird.

7. Epoxidklebstoffzusammensetzung mit zwei Flüssigkeiten gemäß Anspruch 6, wobei das nicht modifizierte Bisphenol-A Typ Epoxidharz ein EpoxidÄquivalentgewicht von 150 bis 400 g/eq hat und es sich bei der Silanverbindung um Aminosilan, Mercaptosilan, Epoxysilan oder eine Kombination daraus handelt.

8. Epoxidklebstoffzusammensetzung mit zwei Flüssigkeiten gemäß Anspruch 1, wobei die Härterkomponente weiterhin ein härtendes Harz, einen Aushärtungskatalysator und ein nicht-reaktives Verdünnungsmittel enthält.

9. Epoxidklebstoffzusammensetzung mit zwei Flüssigkeiten gemäß Anspruch 1, wobei das härtende Harz ein Polyamid mit einer Aminzahl zwischen 150 und 400 mgKOH/g ist.

10. Epoxidklebstoffzusammensetzung mit zwei Flüssigkeiten gemäß Anspruch 1, wobei das Mischverhältnis der Basisharzkomponente und der Härterkomponente 1: 0.6 bis 1: 0.7 im Gewichtsverhältnis oder 1: 0.7 bis 1: 0.8 im Volumenverhältnis beträgt.

## Revendications

1. Composition adhésive époxy en deux parties comprenant un composant de résine de base et un composant agent de durcissement,
dans laquelle le composant de résine de base comprend
(i) une résine époxy modifiée avec une résine de caoutchouc ayant un poids moléculaire moyen en nombre de 1 000 à 8 000 et un acide dimère,
(ii) une résine époxy de type bisphénol A, et
(iii) une résine époxy de type bisphénol F.

2. Composition adhésive époxy en deux parties selon la revendication 1, dans laquelle la résine de caoutchouc ayant un poids moléculaire moyen en nombre de 1 000 à 8 000 est choisie dans le groupe comprenant polybutadiène, acrylonitrile butadiène, caoutchouc de styrène-butadiène, acrylonitrile butadiène à terminaison époxy, acrylonitrile butadiène à terminaison carboxyle, acrylonitrile butadiène à terminaison amine, acrylonitrile butadiène à terminaison hydroxy, et une combinaison de ceux-ci.

3. Composition adhésive époxy en deux parties selon la revendication 1, dans laquelle la résine époxy modifiée avec une résine de caoutchouc et un acide dimère est préparée en faisant réagir une résine époxy avec une résine de caoutchouc et un acide dimère, et la résine de caoutchouc, l'acide dimère, et la résine époxy sont utilisées à raison de 4 à 10% en poids de résine de caoutchouc, de 2 à 8 % en poids d'acide dimère et de 82 à 94 % en poids de résine époxy, respectivement, sur la base de 100% en poids d'un total de ces composants.

4. Composition adhésive époxy en deux parties selon la revendication 1, dans laquelle la résine époxy de type bisphénol A est une résine époxy de type bisphénol A non modifiée, une résine époxy de type bisphénol A modifiée, ou une combinaison de celles-ci.

5. Composition adhésive époxy en deux parties selon la revendication 4, dans laquelle la résine époxy de type bisphénol A modifiée est une résine époxy de type bisphénol A modifiée par un silane.

6. Composition adhésive époxy en deux parties selon la revendication 5, dans laquelle la résine époxy de type bisphénol A modifiée par silane est préparée par réaction d'une résine époxy de type bisphénol A non modifiée avec un composé de silane.

7. Composition adhésive époxy en deux parties selon la revendication 6, dans laquelle la résine époxy de type bisphénol A non modifiée a un poids équivalent d'époxy de 150 à 400 g/éq, et le composé de silane est l'aminosilane, le mercaptosilane, l'époxysilane, ou une combinaison de ceux-ci.

8. Composition adhésive époxy en deux parties selon la revendication 1, dans laquelle le composant agent de durcissement comprend une résine de durcissement, un catalyseur de durcissement, et un diluant non réactif.

9. Composition adhésive époxy en deux parties selon la revendication 8, dans laquelle la résine de durcissement est un polyamide ayant un indice d'amine de 150 à 400 mg KOH/g.

10. Composition adhésive époxy en deux parties selon la revendication 1, dans laquelle un rapport de mélange du composant de résine de base et du composant agent de durcissement est compris entre 1:0,6 et 1:0,7 en poids ou entre 1:0,7 et 1:0,8 en volume.
